# EUROPÄISCHE PATENTANMELDUNG

(11) **EP 0 845 655 A2**
(43) Veröffentlichungstag der Anmeldung: **03.06.1998**
(21) Anmeldenummer: 97117296.0
(22) Anmeldetag: 07.10.1997
(51) Int. Cl.: G01B 11/02, G01B 11/08, G01B 17/00

(54) **Vorrichtung und Verfahren zur Ermittlung des Durchmessers einer Rolle**

(30) Priorität: 29.11.1996 DE 19649391
(71) Anmelder: Voith Sulzer Papiermaschinen GmbH, 89509 Heidenheim (DE)
(72) Erfinder: Kaufmann, Bernd, 89518 Heidenheim (DE); Madrzak, Zygmunt, 89522 Heidenheim (DE)

(57) **Zusammenfassung**

Es wird eine Vorrichtung zur Ermittlung des Durchmessers einer Rolle, insbesondere einer Papier- oder Kartonrolle, mit einem in einem Abstand zur Rolle angeordneten Sensor vorgeschlagen, die sich dadurch auszeichnet, daß der Sensor (15) parallel zur Längsachse (11) der Rolle (3) verfahrbar und/oder parallel zur Längsachse (11) verschwenkbar gelagert ist.

## Beschreibung

Die Erfindung betrifft ein Verfahren zur Ermittlung des Durchmessers einer Rolle, insbesondere einer Papier- oder Kartonrolle gemäß Oberbegriff des Anspruchs 1 sowie eine Vorrichtung zur Ermittlung des Durchmessers einer Rolle, insbesondere einer Papier- oder Kartonrolle gemäß Oberbegriff des Anspruchs 7.

Es sind Verfahren und Vorrichtungen bekannt, die mit Hilfe eines Sensors den Durchmesser einer Rolle ermitteln. Der Sensor ist in einem Abstand zur Rolle ortsfest angeordnet und kann den Abstand Zwischen der Rolle und seiner Position bestimmen, so daß bei einem bekannten Abstand zwischen dem Sensor und dem Dreh- beziehungsweise Mittelpunkt der Rolle der Rollendurchmesser ermittelt werden kann. Es hat sich gezeigt, daß mit den bekannten Verfahren und Vorrichtungen der Rollendurchmesser nicht in allen Fällen zuverlässig und fehlerfrei bestimmt werden kann. Beispielsweise bei Rollen aus Papier treten häufig nichtsystematische Fehler bei der Durchmesser-Ermittlung auf, die durch sogenannte Schrumpfringe hervorgerufen werden. Die Schrumpfringe entstehen beim Trocknen der Bahn und verursachen eine wellige Rollenoberfläche. Erfolgt nun die einzelne Abstandsmessung genau an einer Stelle der Rolle, an der ein Schrumpfring vorhanden ist, so wird ein zu großer Rollendurchmesser ermittelt.

Es ist daher Aufgabe der Erfindung ein Verfahren und eine Vorrichtung zu schaffen, die eine hohe Meßgenauigkeit und eine hohe Reproduzierbarkeit der Meßergebnisse aufweist.

Zur Lösung dieser Aufgabe wird ein Verfahren vorgeschlagen, das die in Anspruch 1 genannten Merkmale aufweist. Dadurch, daß der Abstand zwischen der Rolle und dem Sensor -quer zur Längsachse der Rolle betrachtet- über einen Längsbereich der Rolle gemessen wird, ist das Verfahren sehr zuverlässig und weist eine hohe Meßgenauigkeit auf. Während einer Messung wird mehrmals der Abstand zwischen dem Sensor und der Rolle an verschiedenen Positionen der Rolle beziehungsweise des Rollenmantels gemessen. Aus den Meßwerten der Einzelmessungen wird ein Mittelwert gebildet, der nur minimal, im Rahmen der Meßgenauigkeit des Sensors, vom tatsächlichen Rollendurchmesser, dem sogenannten IST-Durchmesser, abweicht. Bei mehreren, vorzugsweise über die Länge der Rolle verteilt durchgeführten Einzelmessungen des Abstandes wird das Meßergebnis, also der Mittelwert aus allen berücksichtigten Abständen, selbst dann nur in geringem Maße beeinflußt, auch wenn eine Abstandsmessung direkt an einer Stelle der Rolle erfolgt, an der ein Schrumpfring angeordnet ist. Der Abstand ist dadurch verringert. Dieser ungenaue Wert wird durch die anderen Messungen, die neben dem oder den Schrumpfringen gemessen wurden, kompensiert. Das Verfahren zeichnet sich durch eine hohe, reproduzierbare Meßgenauigkeit aus.

Besonders bevorzugt wird eine Ausführungsform des Verfahrens, die sich dadurch auszeichnet, daß der Sensor parallel zur Längsachse der Rolle verfahren wird. Der vorzugsweise als Abstandssensor ausgebildete Sensor, der beispielsweise ein Ultraschall- oder Lasermeßsystem ist, kann somit in einfacher Weise an jede beliebige Position der Rolle beziehungsweise Gegenüberlage zum Rollenmantel verfahren werden.

Weiterhin wird eine Ausführungsform des Verfahrens bevorzugt, bei der der Sensor während der Messung parallel zur Längsachse der Rolle verschwenkt wird. Somit ist es möglich, daß mittels eines -in Richtung der Längsachse der Rolle betrachtet- feststehend ausgebildeten oder eine fixe Position aufweisenden Sensors an mindestens zwei verschiedenen Stellen der Rolle der Abstand gemessen werden kann. Dadurch werden in einfacher Weise die Meßgenauigkeit erhöht und der systematische Fehler vermindert.

Schließlich wird eine Ausführungsform des Verfahrens bevorzugt, die sich dadurch auszeichnet, daß der gemessene Längenbereich der Rolle größer, vorzugsweise um ein vielfaches größer ist als die Breite von auf der Rolle vorhandenen Schrumpfringen. Dadurch wird sichergestellt, daß auch bei einer in einem kleinen Längsbereich der Rolle durchgeführten Messung, die mehrere einzelne Abstandsmessungen umfaßt, auch im ungünstigsten Fall zumindest ein Abstand neben einem Schrumpfring und damit der gewünschte Durchmesserwert gemessen wird.

Weitere vorteilhafte Ausgestaltungen des Verfahrens ergeben sich aus den übrigen Unteransprüchen.

Die Aufgabe wird auch durch eine Vorrichtung gelöst, die die in Anspruch 7 genannten Merkmale aufweist. Diese zeichnet sich dadurch aus, daß der Sensor parallel zur Längsachse der Rolle verfahrbar und/oder parallel zur Längsachse verschwenkbar gelagert ist. Somit ist es möglich, daß während eines Meßvorgangs an wenigstens zwei voneinander beabstandeten Stellen beziehungsweise Positionen auf der Rolle ein Abstand gemessen werden kann. Hierdurch können in vorteilhafter Weise die durch Schrumpfringe oder dergleichen hervorgerufenen Meßfehler kompensiert werden, so daß insbesondere nichtsystematische Fehler bei der Ermittlung des Rollendurchmessers praktisch ausgeschlossen werden können. Der mittels der Vorrichtung ermittelte Rollendurchmesser ist besonders zuverlässig und genau.

Weitere Ausführungsformen der Vorrichtung ergeben sich aus den übrigen Unteransprüchen.

Die Erfindung wird im folgenden anhand der Zeichnung näher erläutert. Es zeigen:
- Figur 1: eine perspektivische Darstellung einer erfindungsgemäßen Vorrichtung und
- Figur 2: einen stark vergrößerten Ausschnitt eines in Figur 1 mit einem "X" gekennzeichneten Bereichs.

Das im folgenden beschriebene Verfahren und die Vorrichtung sind allgemein zur Ermittlung des Durchmessers einer Rolle einsetzbar, beispielsweise innerhalb einer Maschine zur Herstellung einer Materialbahn, insbesondere Papier- oder Kartonbahn, oder einer Rollenschneidmaschine. Im folgenden wird rein beispielhaft davon ausgegangen, daß es sich hier um eine Papierrolle handelt.

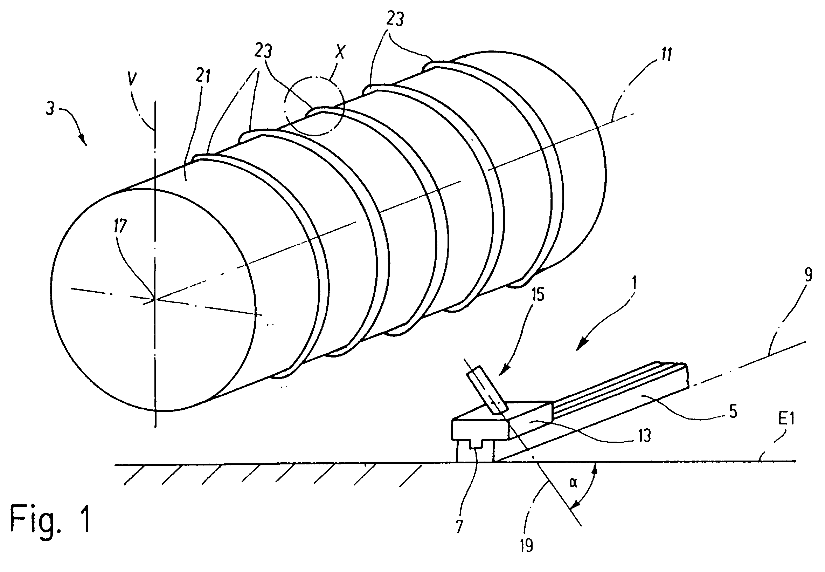

Figur 1 zeigt eine perspektivische Darstellung einer Ausführungsform der erfindungsgemäßen Vorrichtung 1, die zur Ermittlung des Durchmessers einer im folgenden kurz als Rolle 3 bezeichneten Papierrolle dient. Die Vorrichtung 1 umfaßt in diesem Ausführungsbeispiel eine mit einer Nut 7 versehene Führungsschiene 5. Die balkenförmige Führungsschiene 5 ist in einem Abstand zur Rolle 3 angeordnet und mit ihrer hier gestrichelt angedeuteten Langsachse 9 parallel zur Längsachse 11 der Rolle 3 ausgerichtet. In der hier rechteckförmigen Nut 7 der Führungsschiene 5 ist ein in Richtung der Längsachse 9 der Führungsschiene 5 verfahrbarer Trägerschlitten 13 geführt, an dem ein Sensor 15 angeordnet ist. Der Sensor 15 ist als Abstandssensor ausgebildet, der beispielsweise Teil eines Ultraschall- oder Lasermeßsystems sein kann.

Die Vorrichtung 1 ist -in Richtung einer gedachten Vertikalen V betrachtet- unterhalb des Mittelpunktes 17 der Rolle 3 auf einer gedachten Ebene E1 angeordnet. In diesem Ausführungsbeispiel weist die Ebene E1 zum Mittelpunkt 17 der Rolle 3 einen Abstand auf, der dem halben Durchmesser der Rolle entspricht. Der unterhalb des Mittelpunkts der Rolle angeordnete Sensor 15 ist derart gegenüber der durch den Mittelpunkt 17 verlaufenden Längsachse 13 der Rolle 3 ausgerichtet, daß der Abstand zwischen dem Sensor und der Rolle an einer Stelle gemessen wird, die auf einer die Längsachse 11 schneidenden Achse 19 angeordnet ist. Die Achse 19 schließt mit der Ebene E1 einen Winkel α ein, der vom vertikalen Abstand der Ebene E1 von der Längsachse 11 der Rolle 3 abhängig ist. Bei Annäherung der Ebene E1 an die Längsachse 11, also bei einer -in vertikaler Richtung gesehen- Abstandsreduzierung, geht der Winkel α gegen 0.

Die Rolle 3 weist an ihrer Mantelfläche 21 sogenannte Schrumpfringe auf, von denen nur die -nicht maßstabsgetreu abgebildeten- Schrumpfringe 23 dargestellt sind.

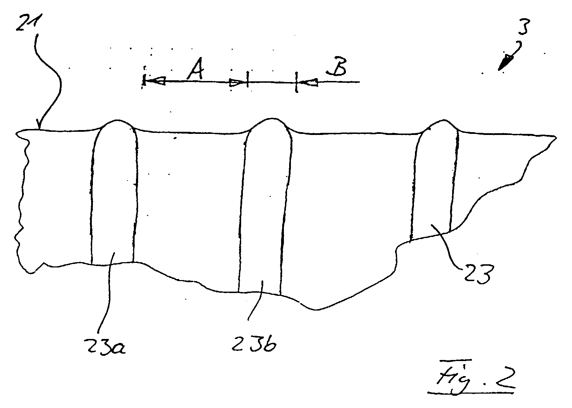

Figur 2 zeigt einen im vergrößerten Maßstab dargestellten Ausschnitt der Rolle 3, der in Figur 1 mit einem "X" gekennzeichnet ist. Die Mantelfläche 21 der Rolle 3 weist einen welligen Verlauf auf, der durch die Schrumpfringe 23 hervorgerufen wird. Die sich während des Trocknens der Papierbahn bildenden Schrumpfringe sind verteilt auf der Mantelfläche 21 angeordnet und umlaufend ausgebildet. In Figur 2 ist der Abstand zwischen zwei Schrumpfringen, hier rein beispielhaft den Schrumpfringen 23a und 23b, mit einem A bezeichnet. Der Schrumpfring 23b erstreckt sich in Längsrichtung der Rolle über einen Längsbereich B. Der zwischen den Schrumpfringen 23a und 23b liegende Längenbereich A ist repräsentativ für den Rollendurchmesser, das heißt der Durchmesser der Rolle im Bereich A ist derjenige, den es durch die Abstandsmessung zwischen dem Sensor und der Rolle zu ermitteln gilt. Wird also der Abstand zwischen dem Sensor und der Rolle an einer Stelle gemessen, an der ein Schrumpfring 23 vorhanden ist, so wird ein kleinerer Abstand gemessen, der zu einem vergrößerten und somit ungenauen Rollen-Durchmesser führt.

Im folgenden soll auf die Funktion der Vorrichtung beziehungsweise auf das Verfahren zur Ermittlung des Durchmessers einer Rolle eingegangen werden:

Zur zuverlässigen Ermittlung des Durchmesser einer Papierrolle beziehungsweise Rolle 3 weist die erfindungsgemäße Vorrichtung 1 den parallel in Richtung der Längsachse 11 der Rolle verfahrbaren Sensor 15 auf. Während einer Messung des Abstandes zwischen dem Sensor 15 und der Rolle 3, die eine Anzahl von Einzelmessungen umfaßt, wird der Trägerschlitten 13 mit dem Sensor 15 verfahren. Der Sensor 15 mißt an mehreren Stellen den Abstand zwischen seiner Position und der Mantelfläche 21. Aus den gemessenen Abstandswerten werden vorzugsweise nur die größten Abstände zur Bildung eines Mittelwerts berücksichtigt. Dadurch entfallen in vorteilhafter Weise die Abstandswerte, die möglicherweise an einer Stelle gemessen wurden, an denen ein Schrumpfring oder eine andere, die Abstandsmessung negativ beeinflussende Erhebung auf der Mantelfläche vorhanden ist. Die erfindungsgemäße Vorrichtung weist eine hohe Meßgenauigkeit auf und vermeidet in vorteilhafter Weise nichtsystematische Fehler bei der Ermittlung eines Rollendurchmessers. Die Messungen können sowohl bei stehender Rolle als auch bei drehender Rolle durchgeführt werden. Ein möglicher Anwendungsbereich des erfindungsgemäßen Verfahrens und der Vorrichtung ist beispielsweise am Ende einer Papier- oder Streichmaschine, in der die fertige Bahn auf einen Tambour aufgewickelt wird.

In einer anderen Ausführungsform der erfindungsgemäßen Vorrichtung 1 kann vorgesehen sein, daß der Sensor 15 um eine Achse verschwenkbar gelagert ist, so daß mindestens zwei Abstandsmessungen in einer fixen Position des den Sensor tragenden Trägerschlittens 13 möglich sind. Der Schwenkbereich des Sensors ist vorzugsweise derart gewählt, daß die Abstände in einem Längenbereich der Rolle gemessen werden können, der größer ist als die durchschnittliche Breite eines Schrumpfringes. Dies führt insbesondere dann zu einer hohen Zuverlässigkeit des ermittelten Rollendurchmessers, wenn lediglich der oder die größten gemessenen Abstandswerte zur direkten Bestimmung des Durchmessers oder zur Mittelwertbildung und nachfolgenden Ermittlung des Durchmessers berücksichtigt werden. Durch einen verschwenkbaren Sensor kann der Aufbau der Vorrichtung vereinfacht werden.

Besonders bevorzugt wird eine Ausführungsform der Vorrichtung, bei der der Sensor parallel zur Längsachse 11 der Rolle 3 verfahrbar und zusätzlich parallel zur Längsachse verschwenkbar gelagert ist. Es ist möglich, beispielsweise an vorbestimmbaren Positionen der Rolle, die durch die verfahrbare Vorrichtung angefahren werden können, einzelne Abstandsmessungen durchzuführen. Durch das Verschwenken des Sensors ist die Möglichkeit gegeben, einen in einer -in Richtung der Längsachse 11 betrachtet- fixen Position des Sensors zwischen dem Sensor und der Rolle gemessenen Abstand zu kontrollieren beziehungsweise zu beurteilen, ob er an einem Schrumpfring gemessen wurde. Hierzu wird einfach durch Verschwenken des Sensors der Abstand an einer benachbarte Stelle gemessen und ein Vergleichsabstandswert ermittelt.

Es kann vorgesehen sein, daß der gemessene Längenbereich der Rolle, also der Bereich, in dem die einzelnen Abstandsmessungen durchgeführt werden, größer ist als die Breite von auf der Rolle vorhandenen Schrumpfringen. Dadurch wird in vorteilhafter Weise vermieden, daß die während einer Messung ermittelten Abstandswerte nicht ausschließlich auf einem einzelnen Schrumpfring gemessen werden. Hierdurch werden die Zuverlässigkeit der Messung verbessert und eine fehlerhafte/ungenaue Ermittlung des Rollendurchmessers durch einen Schrumpfring praktisch ausgeschlossen. Vorzugsweise ist der gemessene Längenbereich der Rolle um ein vielfaches größer als die Breite eines einzelnen Schrumpfrings, beispielsweise die Breite B des in Figur 2 abgebildeten Schrumpfrings 23b, so daß die Meßsicherheit und -zuverlässigkeit insgesamt erhöht ist.

Zusammenfassend ist festzuhalten, daß durch das erfindungsgemäße Verfahren eine Ermittlung des Durchmessers einer Rolle sehr genau und reproduzierbar möglich ist. Die Durchführung des Verfahrens ist besonders einfach mittels einer erfindungsgemäßen Vorrichtung möglich.

## Patentansprüche

1. Verfahren zur Ermittlung des Durchmessers einer Rolle, insbesondere einer Papier- oder Kartonrolle, mit einem in einem Abstand zur Rolle angeordneten Sensor, **dadurch gekennzeichnet**, daß der Abstand zwischen der Rolle und dem Sensor -quer zur Längsachse der Rolle betrachtet- über einen Längsbereich der Rolle gemessen wird.

2. Verfahren nach Anspruch 1, **dadurch gekennzeichnet**, daß der Sensor als Abstandssensor ausgebildet wird.

3. Verfahren nach Anspruch 1 oder 2, **dadurch gekennzeichnet**, daß der Sensor parallel zur Längsachse der Rolle verfahren wird.

4. Verfahren nach einem der vorhergehenden Ansprüche, **dadurch gekennzeichnet**, daß der Sensor während des Messung parallel zur Längsachse der Rolle verschwenkt wird.

5. Verfahren nach einem der vorhergehenden Ansprüche, **dadurch gekennzeichnet**, daß der sich in Richtung der Längsachse der Rolle (3) erstreckende Meßbereich größer, vorzugsweise um ein vielfaches größer ist als die Breite von auf der Rolle vorhandenen Schrumpfringen.

6. Verfahren nach einem der vorhergehenden Ansprüche, **dadurch gekennzeichnet**, daß zur Bildung eines Mittelwertes aus einer Anzahl von während einer Messung gemessenen Abständen nur die größten Abstände berücksichtigt werden.

7. Vorrichtung zur Ermittlung des Durchmessers einer Rolle, insbesondere einer Papier- oder Kartonrolle, mit einem in einem Abstand zur Rolle angeordneten Sensor, insbesondere mit Hilfe eines Verfahrens nach einem der Ansprüche 1 bis 6, **dadurch gekennzeichnet**, daß der Sensor (15) parallel zur Längsachse (11) der Rolle (3) verfahrbar und/oder parallel zur Längsachse (11) verschwenkbar gelagert ist.

8. Vorrichtung nach Anspruch 7, **dadurch gekennzeichnet**, daß der Sensor (15) als Abstandssensor ausgebildet ist.

9. Vorrichtung nach Anspruch 8, **dadurch gekennzeichnet**, daß der Abstandssensor (15) von einem Ultraschall- oder Lasermeßsystem gebildet ist.

10. Vorrichtung nach Anspruch 9, **dadurch gekennzeichnet**, daß die Breite des sich in Richtung der Längsachse der Rolle (3) erstreckenden Meßbereichs des Abstandssensors (15) -vorzugsweise um ein vielfaches- größer ist als die Breite eines auf der Rolle (3) vorhandenen Schrumpfrings (23).
